# EUROPÄISCHE PATENTSCHRIFT

(11) **EP 3 001 067 B1**
(45) Veröffentlichungstag und Bekanntmachung des Hinweises auf die Patenterteilung: **07.03.2018**
(21) Anmeldenummer: 14185941.3
(22) Anmeldetag: 23.09.2014
(51) Int. Cl.: F16H 3/54, H02K 7/116, H02K 7/18, B60K 6/365, B60K 6/383, B60K 6/445, B60K 6/46, F16H 3/72, B60K 6/26, B60K 6/387

(54) **Getriebe, insbesondere Fahrzeuggetriebe**
Transmission, in particular vehicle transmission
Boîte de vitesses, notamment pour véhicule

(43) Veröffentlichungstag der Anmeldung: 30.03.2016
(73) Patentinhaber: Sudheimer, Arnold, 66113 Saarbrücken (DE)
(72) Erfinder: Sudheimer, Arnold, 66113 Saarbrücken (DE)
(74) Vertreter: Patentanwälte Bernhardt / Wolff Partnerschaft mbB

(56) Entgegenhaltungen:
- EP-A1- 0 703 659
- EP-A1- 2 511 570
- DE-A1-102014 005 257
- JP-A- 2007 112 195

## Beschreibung

Die Erfindung betrifft ein Getriebe, insbesondere ein Fahrzeuggetriebe. Der Wunsch, ein Straßenfahrzeug mit Verbrennungsmotor nur mit dem Gaspedal fahren zu können wie ein Dampflokführer mit dem Reglerhebel den ganzen Zug, ist so alt wie das Automobil selbst. Da der Verbrennungsmotor im Gegensatz zur Dampfmaschine fremde Kräfte zum Anlaufen und eine gewisse Drehzahl zum Antrieb, zur Fahrleistung braucht, ist ein Direktantrieb praktisch nicht möglich. Und weil zum Fahren bei unterschiedlichen Belastungen und mit verschiedenen Geschwindigkeiten verschiedene Untersetzungsabstufungen während der Fahrt geschaltet werden müssen, was trotz Ausrücken einer Rutschkupplung zwischen Motor und Getriebe fast immer mit Geräusch verbunden war und mit beschädigten Zahnrädern enden konnte, dachte man schon früh daran, stufenlose kraftschlüssige Getriebe einzusetzen. Die aber arbeiteten mit so hohem Schlupf, dass sie einen Großteil der Motorleistung in Wärme umsetzten und dabei heißliefen. Nur die Keilriemengetriebe mit stufenlos variabler Untersetzung durch Änderung des Umschlingungsdurchmessers einer Riemenscheibe oder beider haben sich bis heute gehalten - leider nur für kleinere Leistungen.
Genau umgekehrt verhielten sich die Flüssigkeits- Drehmomentwandler: In den 40er-Jahren des 20. Jahrhunderts als torsionsflexible Kupplung zwischen Schiffsmaschine und Schraubenwelle zur Übertragung von zigtausend KW entwickelt, arbeiten entsprechend kleinere Versionen auch noch in Diesellokomotiven ausreichend wirtschaftlich.
In den 50er-Jahren fuhren in den USA PKWs mit Drehmomentwandlern und 2 bis 3 automatisch geschalteten Gängen. Ohne Zahnradsätze ging es bei diesem Grad der Verkleinerung nicht mehr. Doch bei den hohen Leistungsreserven der großen Motoren waren Verluste um die 40% kaum spürbar. Allein der Kraftstoffdurchsatz war enorm.
Was den europäischen Autoherstellern eine Warnung hätte sein müssen, wurde von diesen offenbar als Ermutigung aufgefasst, unreflektiert in ihre kleineren Autos mit sparsameren Motoren auch weiter verkleinerte Drehmomentwandler mit weiter verschlechtertem Wirkungsgrad einzubauen. Zugleich lieferten die Hersteller Fahrzeuge gleichen Typs mit zum Standard gehörenden handgeschalteten Synchrongetrieben, so dass bei Vergleichstests leicht festzustellen war, um wieviel schlechter die Automatikwagen bezüglich Beschleunigung, Steigfähigkeit und Höchstgeschwindigkeit waren.

Letzteres zeigt, dass im direkten Gang bei ziehendem Motor ein Gleichlauf von Antriebs- und Abtriebswelle nicht zu erreichen war.
Um An- und Abtriebswelle des Drehmomentwandler möglichst im oberen Drehbereich zu halten und Leistungsverluste zu minimieren, ist man inzwischen bei acht Gängen angelangt. Der denkbar beste Beweis für die Überflüssigkeit von Drehmomentwandlern im Automobilbau. Bleibt noch die Feststellung, dass der mühsam und teuer erkaufte magere Gewinn solcher Getriebe von noch mehr kräftezehrenden im Öl herumquirlenden, leerlaufenden Zahnrädern wieder verspielt wird.
Dies ist auch der Nachteil fast aller allradgetriebener nicht spurgeführter Fahrzeuge: An der Getriebeabtriebswelle hängen zusammen mit dem Verteiler- und Reduktionsgetriebe etwa dreimal so viele kraftzehrende Übertragungsteile als bei einem einfachen Achsantrieb. Da sich alle diese Teile zwangsläufig auch dann mitdrehen, wenn sie keine Drehkraft übertragen, bringt das Abschalten eines Antriebsstranges weniger Vor- als Nachteile, kann es doch das fehlende Mittendifferential nicht ersetzen.
Der Allradantrieb beim jetzigen Stand der Technik ist sinnvoll für Fahrzeuge, die ihren Dienst vorwiegend auf unbefestigtem Grunde tun, langsam und zeitweise ohne Fortbewegung, also Arbeitsfahrzeuge, wie Baumaschinen etc., vor allem jedoch für Zugmaschinen aller Art wie Traktoren, Schlepper u. a..
Ein Pkw mit Allradantrieb ist ein Kombinationsfahrzeug, weil es sowohl auf normaler Fahrbahn ausreichend schnell als auch auf schlechten Wegstrecken und extremen Steigungen vorwärts kommt. Jedoch beides mit Abstrichen: Auf der Autobahn werden weniger stark motorisierte Fahrzeuge flott vorbeiziehen und ein für schweres Gelände gebautes Fahrzeug wird problemlos einen Baumstumpf überfahren, an dem das Kombifahrzeug aufsetzt und nicht weiter kann. Obwohl man sich an das eine gewöhnen und das andere vermeiden kann, bleibt doch an jeder Zapfsäule der Ärger über den hohen Verbrauch und die geringe Leistung.

Das Problem einer Behebung des schlechten Wirkungsgrades aller Allradfahrzeuge wird nicht ernstlich angegangen, eher im Gegenteil: Die bekannten Antriebsschemata werden um weitere Vorrichtungen wie Mess- und - Steuergeräte, Elektronik und Hydraulik, sowie einer oder mehrerer jener Rutschkupplungen erweitert, die dann geradeaus und in Kurven sowie gemäß dem Zustand des Fahrgrundes ganz verbindlich, ganz unverbindlich oder meist halbverbindlich jedem Rad die korrekte Umfangsgeschwindigkeit und Traktionskraft übertragen sollen.
Einen exemplarischen Fall bietet die DE 3427725 A1: Ein vierradgetriebenes Kfz mit Vorderrad - Permanentantrieb und einem über ein Abzweiggetriebene laufenden Hinterradantrieb, mit steuerbarer Rutschkupplung, so dass die Antriebswelle fest zugeschaltet, ganz abgeschaltet oder in einem Zustand zwischen Schlupf und Mitnahme gerät. Sensoren an jedem Rad prüfen Schlupf und Drehzahlen und geben die Werte an ein Steuergerät, das entscheidet, ob die Vorderachse der vollen Motorleistung belegt wird und die Hinterachse nur nachläuft, ob die Motorleistung je hälftig auf beide Achsen aufgeteilt wird oder in einem anderen Verhältnis, wobei die Vorderachse die Dominanz erhält. So lange die Sensoren unter dem Wagen nicht verschmutzen und der Reibungskoeffizient der Kupplung bei deren Erwärmung nach einer Reihe von Kurven konstant bleibt, wird die Schlupfstellung der Kupplung bei dominierendem Frontantrieb und normaler Fahrbahnbeschaffenheit in Kurven kleine Vorteile bringen, die allerdings Umständlichkeit und Aufwand der Steuerung nicht lohnen, zumal es einfachere, weniger empfindliche und billigere Möglichkeiten zu deren Erlangen gibt.
Nicht gelöst wird das Problem der unterschiedlichen Griffigkeit beider Fahrspuren. Der Extremfall einer griffigen Fahrbahnmitte und einer eisglatten Randzone ist in den Wintermonaten keine Seltenheit. Doch auch hier vertraut der Erfinder seinen gesteuerten Rutschkupplungen, die er, statt eines Achsdifferentiales, vor jeden der beiden Hinterradantriebe setzen will. Abgesehen von einer weiteren Komplizierung der empfindlichen Mess- und Steueranlage können zudem durch den Zeitverzug zwischen Messung und Reaktion des Reifens auf der Fahrbahn Fehler entstehen, die den anvisierten Vorteil zum Nachteil machen. Das liegt vor allem an der Massenträgheit aller der an der Mechanik beteiligten Teile, vom kleinen Ventil angefangen, das sich auf den Steuerimpuls hin öffnet, über den Steuerkolben, der mit seiner Mechanik die weitaus größeren Massen der Rutschkupplung beeinflusst bis zur größten Masse eines kompletten Rades mit Bremsscheibe. Ein Fahrzeug, das mit einer Geschwindigkeit von 36 Km/h dahinrollt, legt in einer Sekunde 10 m zurück. Da kann sich mit der Fahrbahn schon einiges ändern. Bei einer Geschwindigkeit von 110 km/h sind das über 30 m/sec, was nicht nur das 3-fache an Zustandsänderungen mit sich bringen kann sondern die träge Mechanik immer zu spät reagierend zur falschen Zeit am falschen Ort das Falsche bewirkt und schließlich bei zu schneller Folge einander entgegen gesetzter Steuerbefehle unruhig in Mittelstellung pendelt. Dabei ist es möglich, dass sich Drehimpulse eines Hinterrades bei kritischen Frequenzen hochschaukeln und das Fahrzeug gefährlich zum Schlingern bringen.

Aus der EP 0 703 659 A1 geht eine elektrische Multirotor-Wechselstrom-Antriebsvorrichtung hervor, die zum Antreiben einer Maschine verwendet wird, die einen elektromagnetischen Bereich, einen Übertragungsbereich und einen Rahmen, der sowohl den elektromagnetischen Bereich als auch den Übertragungsbereich trägt, umfasst. Der elektromagnetische Bereich weist einen Stator mit mindestens zwei Rotoren auf, die bei Einwirkung eines rotierenden oder alternierenden Magnetfelds bei asynchroner Drehzahl ein Antriebsdrehmoment erzeugen können.

Die EP 2 511 570 A1 beschreibt eine Antriebsvorrichtung mit wenigstens einer elektrischen Maschine, mit mindestens einem Planetentrieb, mit einem Differential und mit einer um die Rotationsachse den Drehmoment übertragenden Wirkverbindung zwischen einer Antriebswelle der elektrischen Maschine und dem Planetentrieb sowie einer weiteren drehmomentübertragenden Wirkverbindung zwischen dem Planetentrieb und dem Differential. Die Antriebsvorrichtung weist wenigstens eine mit dem Planetentrieb wirkverbundene Kupplung mit einer durch Druckmittel beaufschlagbaren Betätigungseinrichtung für die Kupplung auf, wobei die Betätigungseinrichtung wenigstens einen in einer Druckkammer verschiebbaren Kolben umfasst.

Aus der JP 2007 112195 A ist zudem ein elektrischer Allradantrieb bekannt, bei dem eine Verbrennungskraftmaschine die Vorderräder sowie einen Generator antreibt, während die Hinterräder mit einem Elektromotor, der vom Generator mit Strom versorgt wird, angetrieben werden können.

Aufgabe der Erfindung ist es, ein Getriebe zu schaffen, bei dem die vorgenannten Probleme nicht auftreten.
Erfindungsgemäß wird diese Aufgabe durch das in Anspruch 1 beschriebene Getriebe gelöst. Das erfindungsgemäße Getriebe umfasst eine Trägerwelle, mit der ein Rotor eines Generators und ein Sonnenrad eines Umlaufrädergetriebes fest verbunden sind, eine Abtriebswelle, die mit einem Planetenträger des Umlaufrädergetriebes fest verbunden ist, sowie einen Trägerkörper, auf dem ein Stator des Generators angeordnet und der mit einem Innenzahnkranz des Umlaufrädergetriebes fest verbunden ist, wobei der Trägerkörper das Umlaufrädergetriebe umgreift und sich an einem Klemmrollen-Sperring, der an einem Gehäuse des Getriebes anliegt, abstützt, wobei die Trägerwelle und die Abtriebswelle gegeneinander verdrehbar angeordnet sind und der axiale Abstand zwischen dem Rotor und dem Stator zur Einstellung der Übersetzung des Getriebes verstellbar ist.

Vorteilhafte Ausgestaltungen des Getriebes ergeben sich aus den Ansprüchen 2 bis 11.

Mit dem Getriebe wird es möglich, einen Teil des Drehmoments mechanisch zu übertragen und einen Teil zum Betrieb des Generators zu nutzen. In einem minimalen axialen Abstand zwischen dem Rotor und dem Stator wird die Trägerwelle durch Drehung der Antriebswelle durch eine zwischen dem Stator und dem Rotor wirkende Anziehungskraft vollständig von der Antriebswelle mitgenommen. Dies resultiert in einem Übersetzungsverhältnis des Getriebes von 1:1. Je weiter der Rotor axial von dem Stator entfernt wird, desto geringer wird die Anziehungskraft, sodass der Rotor gegenüber dem Stator unter Induktion einer elektrischen Spannung rotieren kann. Mit immer größer werdendem Abstand zwischen dem Rotor und dem Stator wird ein immer größer werdender Teil der Antriebsenergie in elektrische Energie umgewandelt, wobei entsprechend nur noch ein kleinerer Teil auf die Antriebswelle übertragen wird.

Das Getriebe eignet sich, ein Fahrzeug zur Hälfte seiner Achszahl mechanisch anzutreiben, wobei das Untersetzungsverhältnis stufenlos und automatisch vom Drehmoment bestimmt und verändert wird, die andere Hälfte bei niederen Fahrgeschwindigkeiten von elektrischen Fahrmotoren, ggf. Tandemmotoren, angetrieben wird.

Erfindungsgemäß ist das Umlaufrädergetriebe ein Planetengetriebe, wobei vorzugsweise der genannte erste Teil des Umlaufrädergetriebes durch ein Sonnenrad des Planetengetriebes und der genannte zweite Teil des Umlaufrädergetriebes durch zumindest einen Planetenträger eines Planetenrads des Planetengetriebes gebildet ist.

In einer Ausgestaltung der Erfindung ist die Trägerwelle gegenüber der Abtriebswelle zur Einstellung der Übersetzung in dem Getriebe in axialer Richtung verschiebbar, um der Abstand zwischen dem Rotor und dem Stator zu verändern.

In der bevorzugten Ausführungsform der Erfindung ist die Trägerwelle über ein Gewinde, vorzugsweise über einen Rollgewindetrieb, mit einer Antriebswelle des Getriebes verbunden und eine axiale Stellung der Trägerwelle gegenüber der Antriebswelle sowie der Abtriebswelle durch Bewegung der Trägerwelle auf dem Gewinde verstellbar.
Je nach anliegendem Drehmoment wird die Trägerwelle und mit ihr der Rotor über das Gewinde axial in verschiedene Positionen gebracht, vorzugsweise derart, dass anhängig von der Größe des Drehmoments ab einem Grenzdrehmoment bei größer werdendem Drehmoment die Trägerwelle von der Antriebswelle und damit der Rotor von dem Stator entfernt wird, sodass ein immer größer werdender Anteil auf der Antriebsenergie vom Generator aufgenommen wird. Dieser kann einen Elektromotor bspw. für den Antrieb einer weiteren Achse mit Energie versorgen und/oder eine Batterie laden.

Zweckmäßigerweise sind die Trägerwelle und die Antriebswelle über eine Feder miteinander verbunden und die Feder ist dazu vorgesehen, die Trägerwelle in einer ersten Übersetzungsposition, d.h. bei Anliegen eines Drehmoments, dass kleiner ist als das genannten Grenzdrehmoment, in der ein Übersetzungsverhältnis i zwischen der Antriebswelle und der Abtriebswelle den Wert 1 beträgt, zu halten.

In einer Ausgestaltung der Erfindung umfasst das Getriebe eine Einrichtung, die zum Erfassen eines Schlupfes eines durch das Getriebe angetriebenen Rads eingerichtet ist, sowie eine Regeleinrichtung, die dazu eingerichtet ist, bei Erfassung des Schlupfes den Elektromotor zu betreiben. Insbesondere wenn die Regeleinrichtung dazu eingerichtet ist, eine Speisung des Elektromotors, insbesondere bei Erfassung des Schlupfes, aus einer Batterie, insbesondere der mittels des Generator aufladbaren Batterie, zu veranlassen, kann auch bei geringen Drehgeschwindigkeiten des Rotors ein ergänzender Antrieb mittels des Elektromotors erreicht werden.

Die Erfindung wird nachfolgend anhand eines Ausführungsbeispiels und den beigefügten Zeichnungen, die sich auf dieses Ausführungsbeispiel beziehen, näher erläutert. Es zeigen:
- Fig. 1: ein erfindungsgemäßes Getriebe teilweise im Schnitt, und
- Fig. 2: schematisch das Getriebe von Fig.1 in verschiedenen Stellungen.

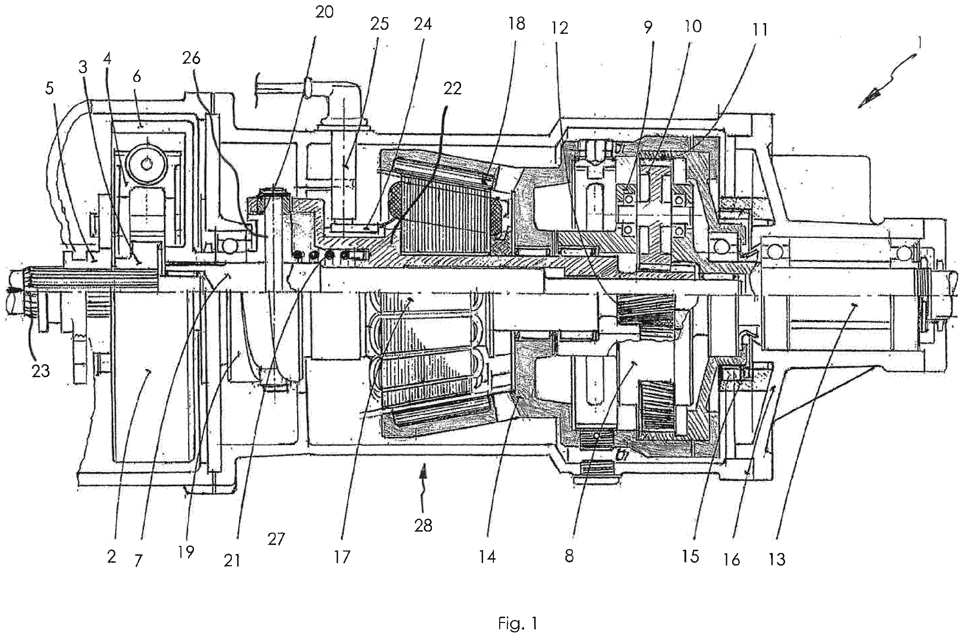

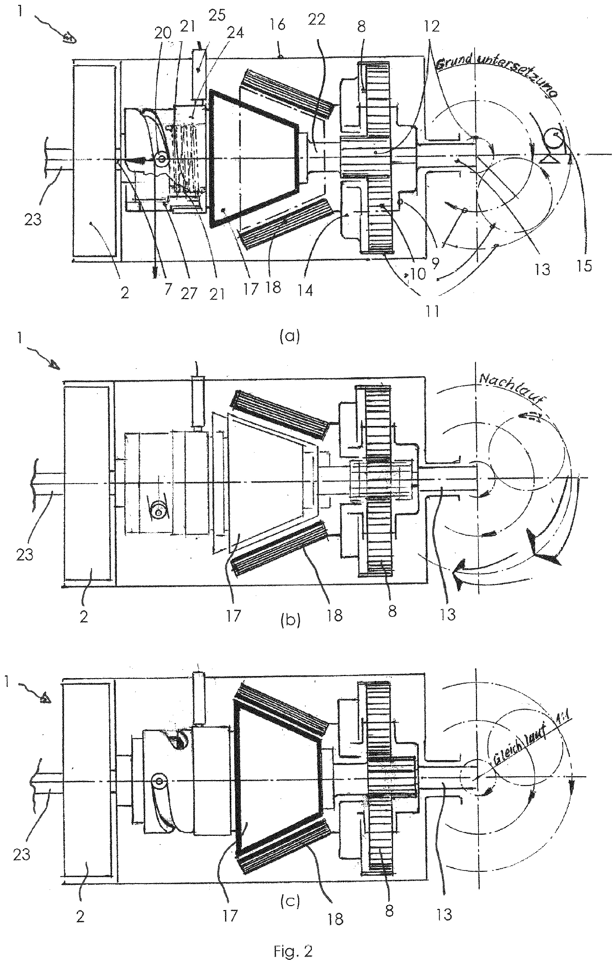

Ein in Fig. 1 gezeigtes Getriebe 1 eines Fahrzeugs umfasst eine Zentralwelle 7, eine als Hohlwelle ausgebildete Trägerwelle 22, die auf der Zentralwelle 7 verdrehbar angeordnet ist, und eine Abtriebswelle 13, die über ein Planetengetriebe 8 mit der Trägerwelle 22 verbunden ist. Die Zentralwelle 7 ist über eine Fliehkraftkupplung 2, die einen Fliehkraftbackenträger 3, Fliehkraftbacken 4, ein Blockierelement 5 sowie eine Trommel 6 umfasst, mit einer motorseitigen Antriebswelle 23 verbunden.
Zur Verbindung der Zentralwelle 7 mit der Trägerwelle 22 ist ein Rollenkupplung vorgesehen, die Rollen 20, die über Achsen 26 mit der Zentralwelle 7 verbunden sind, und ein Trägerelement 27 umfasst, in dem unter Bildung eines Gewindes helixförmig eine Ausnehmung 19 vorgesehen ist, in welcher die Rollen 20 beweglich angeordnet sind. Die Rollenkupplung umfasst ferner eine Feder 21, die unter Druckbeanspruchung zwischen der Trägerwelle 22 und der Zentralwelle 7 sitzt und diese auseinanderdrückt. Die Feder 21 weist eine derart große Federkennlinie auf, dass sie den Rotor 17 bis zum Anliegen eines vorgegebenen Grenzdrehmoments in den in den Fig. 1 und 2c gezeigten Position hält.
Auf der Trägerwelle 22 ist ein mit Spulen versehener konusförmiger Rotor 17 eines Generators 28 angeordnet, dessen Stator 18, der Permanentmagnete umfasst, an einem Trägerkörper 14 angeordnet ist, welcher mit der Abtriebswelle 13 über ein unten näher erläutertes Planetengetriebe verbunden ist. Die Spulen des Rotors 17 sind über einen Schleifkontakt 24 mit einem Leiter 25 verbunden, der in elektrischem Kontakt mit einem hier nicht gezeigten Elektromotor des Fahrzeugs oder/und einer Batterie des Elektromotors steht.
Die Trägerwelle 22 ist mit der Abtriebswelle 13 über das genannte Planetengetriebe verbunden, das ein Sonnenrad 12, das am abtriebsseitigen Ende der Trägerwelle 22 angeordnet ist, und Planetenräder 10 umfasst, die an einem Planetenträger 9 gehalten sind, welcher Planetenträger 9 starr mit der Abtriebswelle 13 verbunden ist. Das Planetengetriebe umfasst ferner einen starr mit dem Trägerkörper 14 verbundenen Innenzahnkranz 11, in den die Planetenräder 10 eingreifen.
Der Trägerkörper 14 umgreift das Planetengetriebe und stützt sich an einen Klemmrollen-Sperring 15 ab, der an einem Gehäuse 16 des Getriebes 1 anliegt, das das Getriebe 1 nach außen verschließt.

Nachfolgend wird die Funktionsweise des erfindungsgemäßen Getriebes 1 anhand der Fig. 2 näher erläutert.
Bei genügend hoher Drehgeschwindigkeit und Drehkraft eines Motors des Fahrzeugs, der die Antriebswelle 23 antreibt, wird über die Antriebswelle 23 und die Fliehkraftkupplung 2 die Zentralwelle 7 in Drehung versetzt. Bei Erreichen des genannten Grenzdrehmoments werden die Rollen 20 in der Ausnehmung 19 bewegt, wodurch die Trägerwelle 22 in Richtung hin zur Antriebswelle 23 gezogen wird (vgl. Position in Fig. 2a). Die Feder 21 wird dabei zusammengedrückt und verdrillt. Der Rotor 17 wird von dem Stator 18 weggezogen und ein Luftspalt zwischen dem Rotor 17 und dem Stator 18 so weit vergrößert, dass der Rotor 17 in dem Stator 18 drehen kann.

Durch Drehung des Rotors 17 wird in die Spulen eine Spannung induziert, die über den Schleifkontakt 24 und den Leiter 25 zu dem Elektromotor bzw. der Batterie übertragen wird, um den Elektromotor anzutreiben. Da das Sonnenrad 12 zusammen mit dem Rotor 17 auf der Trägerwelle 22 sitzt, wird die Abtriebswelle 13 lediglich im Untersetzungsverhältnis des Planetengetriebes 8 angetrieben. Die über die Antriebswelle 23 eingebrachte Leistung wird also teilweise zum Betrieb des Generators und teilweise zum Drehen der Abtriebswelle 13 verwendet.

Dank des Getriebes 1 kann der Elektromotor, wenn große Drehmomente anliegen, beispielsweise beim Anfahren mit einem Fahrzeug, insbesondere auf wenig griffigem Untergrund, unterstützend wirken. Insbesondere kann vorgesehen sein, dass eine Achse des Fahrzeugs direkt über das Getriebe 1 angetrieben wird und der Elektromotor zum Antrieb einer anderen Achse vorgesehen ist. Da der Generator erst ab einer bestimmten Drehgeschwindigkeit dem Elektromotor eine ausreichend große Stromstärke liefert, kann es bei erschwerten Bedingungen beim Anfahren geboten sein, den Elektromotor zur Überbrückung des Zeitraums, in dem nur eine geringe Antriebsleistung vorhanden ist, mittels der Batterie mit Strom zu speisen. Der Zeitraum, in dem die Speisung aus der Batterie notwendig ist, beträgt normalerweise maximal 1 bis 5 Sekunden. Es kann vorgesehen sein, dass der Elektromotor automatisch zugeschaltet wird, wenn mittels eines Sensors ein Schlupf eines oder mehrerer der Räder des Fahrzeugs festgestellt wird, beispielsweise indem ermittelt wird, dass sich zumindest eines der Räder mit einer Geschwindigkeit dreht, die von derjenigen eines oder mehrerer der anderen Räder über einen Grenzwert hinaus abweicht. Alternativ oder ergänzend dazu kann vorgesehen sein, dass der Elektromotor, vorzugsweise manuell, zuschaltbar ist.

Wenn das zwischen der Zentralwelle 7 und der Trägerwelle 22 zu übertragende Drehmoment beim Betrieb abnimmt, wird der Rotor 17 aufgrund der Spannung der Feder 5 weiter in Richtung hin zum Stator 18 gedrückt und damit weiter in ein dichteres Magnetfeld der Permanentmagnete des Stators 18 bewegt (vgl. Position in Fig. 2b). Der Rotor 17 wird nun magnetisch immer mehr vom Stator 18 angezogen und verdreht sich gegenüber dem Stator deshalb immer weniger, je mehr der Rotor 17 an den Stator 18 heranrückt. Dementsprechend wirken der Rotor 17 und der Stator 18 mit Heranrücken des Rotors 17 an den Stator 18 immer mehr wie eine Magnetkupplung. Die Stromerzeugung durch den Generator nimmt mehr und mehr ab, je weiter sich der Rotor 17 zu dem Stator 18 hinbewegt bis die Trägerwelle 22 und die Abtriebswelle 13 gleichlaufen. Bei ansteigender Belastung kehrt sich der beschriebene Vorgang wieder um, d.h. die Rollenkupplung zieht den Rotor 17 vom Stator 18 weg und es wird wieder Spannung in die Spulen induziert.

Entsprechend lässt sich mittels des Getriebes bei Anliegen großer Drehmomente automatisch von einachsigen auf zweiachsigen Antrieb des Fahrzeugs umstellen und umgekehrt.

Fig. 2c zeigt das erfindungsgemäße Getriebe beim Gleichlauf aller drehenden Teile. Das Getriebe 1 selbst arbeitet dann nicht mehr, sondern dient lediglich als Verbindungsteile der Antriebswelle 23 und der Abtriebswelle 13.

Es versteht sich, dass für das Getriebe ein Drehmomentwert ermittelt werden muss, der bei Nennleistung und Nenndrehzahl des Verbrennungsmotors und Höchstgeschwindigkeiten des Fahrzeugs, vorzugsweise auf horizontalebener Fahrbahn bei Windstille, zu ermitteln ist.

Ferner kann vorgesehen sein, dass bei Erzeugung lediglich eines geringen Stroms durch den Generator der Strom zur Ladung eines Akkus genutzt wird. Dies kann relevant sein, da die Stromerzeugung für die Elektromotoren nur bis zu einem bestimmten Belastungsgrad merklich zum Fahrzeugantrieb beiträgt.

## Patentansprüche

1. Getriebe, insbesondere Fahrzeuggetriebe, das eine Trägerwelle (22), mit der ein Rotor (17) eines Generators (28) und ein Sonnenrad (12) eines Umlaufrädergetriebes fest verbunden sind, eine Abtriebswelle (13), die mit einem Planetenträger (9) des Umlaufrädergetriebes fest verbunden ist, sowie einen Trägerkörper (14), auf dem ein Stator (18) des Generators (28) angeordnet und der mit einem Innenzahnkranz (11) des Umlaufrädergetriebes starr verbunden ist, umfasst,
wobei der Trägerkörper (14) das Umlaufrädergetriebe umgreift und sich an einem Klemmrollen-Sperring (15), der an einem Gehäuse (16) des Getriebes (1) anliegt, abstützt,
wobei die Trägerwelle (22) und die Abtriebswelle (13) gegeneinander verdrehbar angeordnet sind und der axiale Abstand zwischen dem Rotor (17) und dem Stator (18) zur Einstellung der Übersetzung des Getriebes (1) verstellbar ist.

2. Getriebe nach Anspruch 1,
**dadurch gekennzeichnet,**
**dass** die Trägerwelle (22) gegenüber der Abtriebswelle (13) zur Einstellung der Übersetzung in dem Getriebe (1) in axialer Richtung verschiebbar ist.

3. Getriebe nach Anspruch 1 oder 2,
**dadurch gekennzeichnet,**
**dass** die Trägerwelle (22) über ein Gewinde (19), vorzugsweise über einen Rollgewindetrieb, mit einer Antriebswelle (23) des Getriebes (1) verbunden ist und eine axiale Stellung der Trägerwelle (22) gegenüber der Antriebswelle (23) sowie der Abtriebswelle (13) durch Bewegung der Trägerwelle (22) auf dem Gewinde (19) verstellbar ist.

4. Getriebe nach Anspruch 3,
**dadurch gekennzeichnet,**
**dass** das Gewinde (19) derart vorgesehen ist, dass die Trägerwelle (22) durch ein auf die Antriebswelle (23) wirkendes Drehmoment in axialer Richtung von der Abtriebswelle (13) und der Rotor (17) von dem Stator (18) wegbewegt wird.

5. Getriebe nach Anspruch 3 oder 4,
**dadurch gekennzeichnet,**
**dass** die Trägerwelle (22) und die Antriebswelle (23) über eine Feder (21) miteinander verbunden sind und die Feder (21) dazu vorgesehen ist, die Trägerwelle (22) in einer ersten Übersetzungsposition, in der ein Übersetzungsverhältnis i zwischen der Antriebswelle (23) und der Abtriebswelle (13) den Wert 1 beträgt, zu halten.

6. Getriebe nach einem der Ansprüche 3 bis 5,
**dadurch gekennzeichnet,**
**dass** der Rotor (17) und der Stator (18) derart gebildet sind, dass bei Anliegen eines Drehmoments an der Antriebswelle (23), das kleiner als ein Grenzdrehmoments G ist, der Rotor (17) den Stator (18) bei Rotation der Trägerwelle (22) mitnimmt.

7. Getriebe nach einem der Ansprüche 3 bis 6,
**dadurch gekennzeichnet,**
**dass** das Gewinde (19) derart gebildet ist und die Feder (21) eine derartige Federkennlinie aufweist, dass bei Anliegen eines Drehmoments an der Antriebswelle (23), das größer als das Grenzdrehmoment G ist, die Trägerwelle (22) von der Abtriebswelle (13) wegbewegt wird, sodass das Übersetzungsverhältnis zwischen der Antriebswelle (23) und der Abtriebswelle (13) abnimmt.

8. Getriebe nach einem der Ansprüche 1 bis 7,
**dadurch gekennzeichnet,**
**dass** das Getriebe (1) mit einer Leitung (25) versehen ist, über die sich mittels des Generators erzeugte elektrische Energie entnehmen lässt, vorzugsweise zum Betreiben eines Elektromotors und/oder einer Batterie eines Fahrzeugs, für welches das Getriebe vorgesehen ist.

9. Getriebe nach einem der Ansprüche 1 bis 8,
**dadurch gekennzeichnet,**
**dass** der Stator (18) einen Permanentmagneten aufweist und der Rotor (17) mit zumindest einer Spule versehen ist.

10. Getriebe nach einem der Ansprüche 1 bis 9,
**dadurch gekennzeichnet,**
**dass** das Getriebe (1) eine Einrichtung, die zum Erfassen eines Schlupfes eines durch das Getriebe angetriebenen Rads eingerichtet ist, sowie eine Regeleinrichtung umfasst, die dazu eingerichtet ist, bei Erfassung des Schlupfes einen Elektromotor zu betreiben.

11. Getriebe nach Anspruch 10,
**dadurch gekennzeichnet,**
**dass** die Regeleinrichtung dazu eingerichtet ist, eine Speisung des Elektromotors, vorzugsweise bei Erfassung des Schlupfes, aus einer Batterie zu veranlassen.

## Claims

1. Transmission, in particular vehicle transmission, which comprises a carrier shaft (22), to which a rotor (17) of a generator (28) and a sun gear (12) of an epicyclic gear mechanism are fixedly connected, an output shaft (13) which is fixedly connected to a planetary carrier (9) of the epicyclic gear mechanism, and a carrier body (14) on which a stator (18) of the generator (28) is arranged and which is rigidly connected to an internal geared ring (11) of the epicyclic gear mechanism,
wherein the carrier body (14) engages around the epicyclic gear mechanism and is supported on a clamping roller locking ring (15) which rests on a housing (16) of the transmission (1),
wherein the carrier shaft (22) and the output shaft (13) are arranged so as to be rotatable with respect to one another, and the axial distance between the rotor (17) and the stator (18) can be adjusted in order to set the transmission ratio of the transmission (1).

2. Transmission according to Claim 1,
**characterized**
**in that** the carrier shaft (22) can be displaced in the axial direction with respect to the output shaft (13) in order to set the transmission ratio in the transmission (1).

3. Transmission according to Claim 1 or 2,
**characterized**
**in that** the carrier shaft (22) is connected to a drive shaft (23) of the transmission (1) via a thread element (19), preferably via a roller thread drive, and an axial position of the carrier shaft (22) with respect to the drive shaft (23) and the output shaft (13) can be adjusted by moving the carrier shaft (22) on the thread element (19).

4. Transmission according to Claim 3,
**characterized**
**in that** the thread element (19) is provided in such a way that the carrier shaft (22) is moved away from the output shaft (13) in the axial direction by a torque acting on the drive shaft (23) and the rotor (17) is moved away from the stator (18).

5. Transmission according to Claim 3 or 4,
**characterized**
**in that** the carrier shaft (22) and the drive shaft (23) are connected to one another via a spring (21), and the spring (21) is provided for holding the carrier shaft (22) in a first transmission ratio position in which a transmission ratio i between the drive shaft (23) and the output shaft (13) has the value 1.

6. Transmission according to one of Claims 3 to 5,
**characterized**
**in that** the rotor (17) and the stator (18) are formed in such a way that when a torque is applied to the drive shaft (23) which is less than a limiting torque G, the rotor (17) entrains the stator (18) when the carrier shaft (22) rotates.

7. Transmission according to one of Claims 3 to 6,
**characterized**
**in that** the thread element (19) is formed in such a way, and the spring (21) has such a spring characteristic curve, that when a torque is applied to the drive shaft (23) which is greater than the limiting torque G, the carrier shaft (22) is moved away from the output shaft (13), with the result that the transmission ratio between the drive shaft (23) and the output shaft (13) decreases.

8. Transmission according to one of Claims 1 to 7,
**characterized**
**in that** the transmission (1) is provided with a line (25) via which electrical energy which is generated by means of the generator can be extracted, preferably for operating an electric motor and/or a battery of a vehicle for which the transmission is provided.

9. Transmission according to one of Claims 1 to 8,
**characterized**
**in that** the stator (18) has a permanent magnet, and the rotor (17) is provided with at least one coil.

10. Transmission according to one of Claims 1 to 9,
**characterized**
**in that** the transmission (1) comprises a device which is configured to detect a slip of a wheel driven by the transmission, and a control device which is configured to operate an electric motor when the slip is detected.

11. Transmission according to Claim 10,
**characterized**
**in that** the control device is configured to cause the electric motor to be supplied from a battery, preferably when the slip is detected.

## Revendications

1. Boîte de vitesses, en particulier boîte de vitesses pour véhicule, qui comprend un arbre porteur (22) auquel est relié solidairement un rotor (17) d'un générateur (28) et une roue solaire (12) d'un train épicycloïdal, un arbre mené (13) qui est relié solidairement à un porte-satellites (9) du train épicycloïdal, ainsi qu'un corps porteur (14) sur lequel est agencé un stator (18) du générateur (28) et qui est relié rigidement à une couronne à denture intérieure (11) du train épicycloïdal,
dans laquelle
le corps porteur (14) entoure le train épicycloïdal et prend appui contre un anneau de blocage à galets de coincement (15) qui repose contre un carter (16) de la boîte de vitesses (1),
l'arbre porteur (22) et l'arbre mené (13) sont agencés de manière à pouvoir tourner l'un par rapport à l'autre, et la distance axiale entre le rotor (17) et le stator (18) est variable pour régler la démultiplication de la boîte de vitesses (1).

2. Boîte de vitesses selon la revendication 1,
**caractérisée en ce que**
l'arbre porteur (22) est mobile en translation en direction axiale par rapport à l'arbre mené (13) dans la boîte de vitesses, afin de régler la démultiplication.

3. Boîte de vitesses selon la revendication 1 ou 2,
**caractérisée en ce que**
l'arbre porteur (22) est relié à un arbre menant (23) de la boîte de vitesses (1) par un pas de vis (19), de préférence par un entraînement à pas de vis et à rouleaux, et une position axiale de l'arbre porteur (22) par rapport à l'arbre menant (23) et par rapport à l'arbre mené (13) est variable par un mouvement de l'arbre porteur (22) sur le pas de vis (19).

4. Boîte de vitesses selon la revendication 3,
**caractérisée en ce que**
le pas de vis (19) est prévu de telle sorte que par un couple de rotation agissant sur l'arbre menant (23), l'arbre porteur (22) est déplacé en éloignement de l'arbre mené (13) et le rotor (17) est déplacé en éloignement du stator (18), en direction axiale.

5. Boîte de vitesses selon la revendication 3 ou 4,
**caractérisée en ce que**
l'arbre porteur (22) et l'arbre menant (23) sont reliés l'un à l'autre par un ressort (21), et le ressort (21) est prévu pour maintenir l'arbre porteur (22) dans une première position de démultiplication dans laquelle un rapport de démultiplication i entre l'arbre menant (23) et l'arbre mené (13) présente la valeur 1.

6. Boîte de vitesses selon l'une des revendications 3 à 5,
**caractérisée en ce que**
le rotor (17) et le stator (18) sont réalisés de telle sorte que lorsqu'un couple de rotation s'applique à l'arbre menant (23), qui est inférieur à un couple de rotation limite G, le rotor (17) emmène le stator (18) lors d'une rotation de l'arbre porteur (22).

7. Boîte de vitesses selon l'une des revendications 3 à 6,
**caractérisée en ce que**
le pas de vis (19) est réalisé de telle sorte et le ressort (21) présente une courbe caractéristique d'élasticité de telle sorte que lorsqu'un couple de rotation s'applique à l'arbre menant (23), qui est supérieur au couple de rotation limite G, l'arbre porteur (22) est déplacé en éloignement de l'arbre mené (13), de telle sorte que le rapport de démultiplication entre l'arbre menant (23) et l'arbre mené (13) diminue.

8. Boîte de vitesses selon l'une des revendications 1 à 7,
**caractérisée en ce que**
la boîte de vitesses (1) est pourvue d'une ligne (25) permettant de prélever l'énergie électrique générée par le générateur, de préférence pour faire fonctionner un moteur électrique et/ou alimenter une batterie d'un véhicule auquel la boîte de vitesses est destinée.

9. Boîte de vitesses selon l'une des revendications 1 à 8,
**caractérisée en ce que**
le stator (18) présente un aimant permanent et le rotor (17) est pourvu d'au moins une bobine.

10. Boîte de vitesses selon l'une des revendications 1 à 9,
**caractérisée en ce que**
la boîte de vitesses (1) comprend un moyen qui est conçu pour détecter un patinage d'une roue entraînée par la boîte de vitesses, ainsi qu'un moyen de régulation conçu pour faire fonctionner un moteur électrique lorsque le patinage est détecté.

11. Boîte de vitesses selon la revendication 10,
**caractérisée en ce que**
le moyen de régulation est conçu pour initier une alimentation du moteur électrique à partir d'une batterie, de préférence lorsque le patinage est détecté.
